# EUROPÄISCHE PATENTSCHRIFT

(11) **EP 2 217 842 B1**
(45) Veröffentlichungstag und Bekanntmachung des Hinweises auf die Patenterteilung: **24.08.2011**
(21) Anmeldenummer: 08757261.6
(22) Anmeldetag: 12.06.2008
(51) Int. Cl.: F16L 27/11, F16L 51/02

(54) **KOMPENSATIONSELEMENT FÜR ROHRLEITUNGEN**
COMPENSATING ELEMENT FOR PIPE LINES
ÉLÉMENT DE COMPENSATION POUR CONDUITS TUBULAIRES

(30) Priorität: 20.06.2007 EP 07012051
(43) Veröffentlichungstag der Anmeldung: 18.08.2010
(73) Patentinhaber: Boa AG, 6023 Rothenburg (CH)
(72) Erfinder: DRÄYER, Hans Rudolf, CH-6023 Rothenburg (CH); AMOR, Adel, CH-6020 Emmenbrücke (CH)
(74) Vertreter: Lermer, Christoph
(86) Internationale Anmeldenummer: PCT/CH2008/000268
(87) Internationale Veröffentlichungsnummer: WO 2008/154761

(56) Entgegenhaltungen:
- DE-C1- 19 930 852
- DE-U1- 29 614 098
- DE-U1- 29 903 365
- US-A1- 2004 226 622

## Beschreibung

Die vorliegende Erfindung betrifft ein Kompensationselement sowie ein Verfahren zu dessen Herstellung gemäss den Oberbegriffen der unabhängigen Ansprüche.

### Stand der Technik

Derartige Kompensationselemente dienen dem Ausgleich von Längenänderungen und Fehlausrichtungen (Versätzen) in Rohrleitungen, welche z.B. durch Temperaturunterschiede, Montageunstimmigkeiten oder Fundament - Senkungen hervorgerufen sein können, sowie, je nach Anwendung, zudem auch dem schwingungstechnischen Entkoppeln von über Rohrleitungen miteinander verbundenen Systemen. Typische Verwendungsgebiete dieser Kompensatoren sind der allgemeine Rohrleitungsbau sowie der Anlagenbau mit den Schwerpunkten Kraftwerkstechnik, Maschinenbau (insbesondere Verbrennungsmotoren/Turbinen/Kompressoren), chemische/pharmazeutische Industrie sowie Lebensmittelindustrie. Typische in den Kompensationselementen bzw. den damit verbundenen Rohrleitungen geführte Medien sind Wasser, Dampf, Benzin, Öl, chemische Produkte, flüssige Lebensmittel bzw. -bestandteile. Auch Vakuumanwendungen sind bekannt.

Insbesondere in der chemischen/pharmazeutischen Industrie, in der Lebensmittelindustrie und in der Vakuumtechnik ergibt sich bei den heute bekannten gattungsgemässen Kompensationselementen das Problem, dass sich Rückstände bzw. Verunreinigungen festsetzen können und dann im Laufe der Zeit zu Problemen betreffend die Hygiene/Reinheit und/oder zu Korrosionsproblemen führen können.

Das Dokument US 2004/0226622 offenbart Kopplungsvorrichtungen zur Vibrationsdämpfung, bei denen Balge vorgesehen sind, die eingefügtes viscoelastisches Material aufweisen.

### Darstellung der Erfindung

Es stellt sich daher die Aufgabe, ein Kompensationselement und ein Verfahren zu dessen Herstellung zur Verfügung zu stellen, welche die Nachteile des Standes der Technik nicht aufweisen oder zumindest teilweise vermeiden.

Diese Aufgabe wird durch ein Herstellverfahren gemäss dem unabhängigen Patentanspruch 1 und ein Kompensationselement gemäß dem Patentanspruch 8 gelöst.

Ein Verfahren zur Herstellung eines Kompensationselements zum Ausgleichen von Längenänderungen oder eines Versatzes in Rohrleitungen, umfasst die Schritte: a) Bereitstellen eines dünnwandigen Wellrohrteils und eines zugeordneten flanschartigen Anschlussteils; b) Anordnen des flanschartigen Anschlussteils an einem Ende des Wellrohrteils; und c) stoffschlüssiges Verbinden des Wellrohrteils mit dem flanschartigen Anschlussteil über eine Fügestelle, derart, dass diese auf der Innenseite des durch sie gebildeten Kompensationselements zusammen mit der stoffschlüssigen Fügestelle eine durchgehende, geschlossene Oberfläche bilden, wobei beim Anordnen des flanschartigen Anschlussteils an dem Ende des Wellrohrteils beide Teile axial ineinander eingeschoben werden, wobei das stoffschlüssige Verbinden durch Verschweissen erfolgt, und wobei beim Verschweissen das Wellrohrteil und das flanschartige Anschlussteil radial aneinander angepresst werden.

Vorzugsweise wird beim Anordnen des flanschartigen Anschlussteils an dem Ende des Wellrohrteils ein vom Wellrohrteil gebildeter Rohrstutzen über das flanschartige Anschlussteil geschoben.

Beim Anordnen des flanschartigen Anschlussteils an dem Ende des Wellrohrteils wird insbesondere ein vom Wellrohrteil gebildeter Rohrstutzen in das flanschartige Anschlussteil eingeschoben.

Beim Verschweissen können das Wellrohrteil und das flanschartige Anschlussteil radial von innen her mittels einer im aktivierten Zustand feststehenden radialen Spreizvorrichtung aneinander angepresst werden.

Beim Verschweissen können das Wellrohrteil und das flanschartige Anschlussteil radial von innen her mittels einer beim Verschweissen am Innenumfang abrollenden Andrückrolle aneinander angepresst werden.

Das Verschweissen kann ausschliesslich unter einem Aufschmelzen von Material des Wellrohrteils und des flanschartigen Anschlussteils erfolgen.

Das Verschweissen kann durch TIG-Schweissen oder Laserschweissen erfolgen.

Ein Kompensationselement gemäß der Erfindung ist dadurch gekennzeichnet, dass das Kompensationselement mit dem Verfahren wie oben beschrieben hergestellt ist.

Das Kompensationselement umfasst ein dünnwandiges Wellrohrteil, welches an einem oder an beiden Enden mit einem flanschartigen Anschlussteil verbunden ist, welches wiederum der Ermöglichung einer bevorzugterweise lösbaren Ankopplung an eine Rohrleitung dient. Dabei ist das Wellrohrteil mit dem jeweiligen Anschlussteil auf der Innenseite des Kompensationselements an einer Fügestelle stoffschlüssig verbunden, derart, dass diese zusammen mit der Fügestelle auf der Innenseite des Kompensationselements eine durchgehende, geschlossene Oberfläche bilden. Eine solche Oberfläche ist frei von Spalten und Löchern und weist zudem keine sprunghaften Reueiveränderungen auf. Derartige Kompensationselemente lassen sich im Vergleich mit den heute bekannten Kompensationselementen problemlos und rückstandsfrei reinigen und erfüllen damit höchste Ansprüche betreffend Hygiene, Kontaminationsfreiheit und Dauerhaftigkeit. In einer bevorzugten Ausführungsform des Kompensationselements weisen das Wellrohrteil und das flanschartige Anschlussteil im wesentlichen identische lichte Durchtrittsquerschnitte auf, und zwar bevorzugterweise im wesentlichen identische lichte Innendurchmesser. Unter im wesentlichen identischen lichten Durchtrittsquerschnitten werden lichte Durchtrittsquerschnitte verstanden, welche dieselbe Querschnittsform und um höchstens 5% voneinander abweichende Querschnittsflächen aufweisen. Hierdurch wird eine optimale Strömungsführung im Kompensationselement ermöglicht.

Zwischen der dem jeweiligen flanschartigen Anschlussteil nächstgelegenen Rohrwelle des Wellrohrteils und dem flanschartigen Anschlussteil ist ein Abstand vorhanden, der grösser ist als der Abstand zwischen den Kämmen zweier benachbarter Rohrwellen des Wellrohrteils. Durch diesen Abstand ist es möglich, Befestigungsmittel, wie z.B. Schrauben, Muttern oder Spannhaken, auf der dem Wellrohrteil zugewandten Seite des Anschlussteils anzuordnen, zwecks Befestigung des Kompensationselements an einer Rohrleitung. In noch einer weiteren bevorzugten Ausführungsform des Kompensationselements ist der Bereich zwischen der dem Anschlussteil nächstliegenden Rohrwelle des Wellrohrteils und dem flanschartigen Anschlussteil durch einen vom Wellrohrteil gebildeten Rohrstutzen gebildet, welcher bevorzugterweise im wesentlichen zylindrisch, d.h. beispielsweise rein zylindrisch, gestuft zylindrisch mit bevorzugterweise konischen Übergängen oder leicht konisch ist. Insbesondere bei Ausführungsformen aus Metall lassen sich dadurch, dass dieser Rohrstutzen Stutzen vom dünnwandigen Wellrohrteil bereitgestellt wird, welcher üblicherweise durch Umformung und anschliessendes Verschweissen eines Blechbandes gebildet wird, die Herstellkosten auf ein Minimum senken, da das flanschartige Anschlussteil, welches üblicherweise als Drehteil durch zerspanende Bearbeitung erzeugt wird, hierdurch auf die eigentliche Flanschpartie reduziert werden kann. In noch einer weiteren bevorzugten Ausführungsform des Kompensationselements überlappen sich der Wellrohrteil und der flanschartige Anschlussteil in axialer Richtung, und zwar bevorzugterweise derart, dass der Wellrohrteil und bevorzugterweise ein von diesem gebildeter Rohrstutzen axial in den flanschartigen Anschlussteil eintritt oder über diesen geschoben ist. Hierdurch wird eine einfache Herstellung der erfindungsgemässen Kompensationselemente und eine hohe Fertigungspräzision begünstigt, da bei geeigneter konstruktiver Ausgestaltung durch ein axiales Zusammenschieben von Wellrohrteil und flanschartigem Anschlussteil automatisch eine radiale Ausrichtung dieser Bauteile zueinander erreicht werden kann.

Der Wellrohrteil ist an seinem in axialer Richtung gesehen äussersten Ende stoffschlüssig mit dem flanschartigen Anschlussteil verbunden. Auf diese Weise werden besonders einfache konstruktive Ausgestaltungen möglich.

Auf der Innenseite des Kompensationselements kann der Übergang vom flanschartigen Anschlussstück auf den Wellrohrteil im wesentlichen stufenlos sein. Die Innenquerschnitte des Wellrohrteils und des flanschartigen Anschlussstücks weisen also im Übergangsbereich einen praktisch identischen Querschnitt sowohl bezüglich der Querschnittsform als auch bezüglich der Querschnittsfläche auf, was eine verlustarme Strömungsführung begünstigt.

Mit Vorteil kommt bei den Kompensationselementen ein parallel gewelltes Wellrohrteil mit einer Vielzahl paralleler Rohrwellen zum Einsatz, welches der Vorteil aufweist, dass geometrisch einfache und exakt definierte Übergänge vom eigentlichen Wellenteil auf einen etwaigen daran anschliessenden Rohrstutzen bzw. an das flanschartige Anschlussteil möglich sind. Es ist aber ebenso vorgesehen, ein ein- oder mehrgängig schraubenförmig gewelltes Wellrohrteil zu verwenden.

Bevorzugterweise bestehen die Kompensationselemente aus Metall, insbesondere aus rostfreiem Stahl, wobei jedoch ebenfalls Ausführungsformen vorgesehen sind, bei denen diese aus Kunststoff gebildet sind, insbesondere aus PVC. Diese Materialien sind beständig und lassen sich durch Schweissen Stoffschlüssig miteinander verbinden.

Dabei ist es bei Kompensationselementen aus Metall bevorzugt, wenn diese durch TIG-Schweissen (Tungsten Inert Gas - Schweissen) oder Laserschweissen miteinander verbunden sind, da sich mit diesen Fügemethoden extrem feine, porenfreie Schweissnähte erzeugen lassen, was zudem auch ohne Zuführung von Fremdmaterial möglich ist mit dem Effekt, dass etwaige Verunreinigungen durch Schweisshilfs- bzw. Zusatzstoffe von vornherein ausgeschlossen werden können.

Durch das erfindungsgemässe Verfahren lassen sich erfindungsgemässe Kompensationselemente auf einfache und kostengünstige Weise herstellen. Dabei ist es bevorzugt, dass beim Anordnen des flanschartigen Anschlussteils am Ende des Wellrohrteils beide Teile axial ineinander eingeschoben werden, bevorzugterweise indem ein vom Wellrohrteil gebildeter Rohrstutzen über das flanschartige Anschlussteil geschoben wird oder in das flanschartige Anschlussteil eingeschoben wird, wobei bevorzugterweise gleichzeitig der Wellrohrteil und der flanschartige Anschlussteil radial zueinander ausgerichtet werden.

Weiter ist es bevorzugt, wenn das stoffschlüssige Verbinden von Wellrohrteil und flanschartigem Anschlussteil durch Verschweissen, insbesondere durch TIG-Schweissen oder Laserschweissen erfolgt, da diese Verfahren vollautomatisierbar sind, extrem feine und glatte Schweissnähte ermöglichen und ohne Zuführung von Zusatzwerkstoffen durchführbar sind, wodurch eine Verschmutzung bzw. Kontamination über solche Zusatzwerkstoffe von vornherein ausgeschlossen werden kann.

Ein derartiges Verfahren, bei dem das Verschweissen von Wellrohrteil und flanschartigem Anschlussteil ausschliesslich unter einem Aufschmelzen von Material des Wellrohrteils und des flanschartigen Anschlussteils erfolgt, d.h. ohne Zuführung eines Zusatzwerkstoffs, stellt eine bevorzugte Ausführungsform des erfindungsgemässen Verfahrens dar. Bei dem Verfahren überdecken beim Anordnen des flanschartigen Anschlussteils am Ende des Wellrohrteils beide Teile einander axial, z.B. indem ein Rohrstutzen des Wellrohrteils in das flanschartige Anschlussstück eingeschoben wird, werden beim Verschweissen das Wellrohrteil und das flanschartige Anschlussteil zumindest in dem Bereich, in welchem gerade geschweisst wird, radial aneinander angepresst. Dies erfolgt bevorzugterweise von innen her mittels einer im aktivierten Zustand feststehenden radialen Spreizvorrichtung oder mittels einer beim Verschweissen am Innenumfang abrollenden Andrückrolle. Hierdurch besteht in der Schweisszone praktisch kein radialer Spalt zwischen dem Wellrohrteil und dem flanschartigen Anschlussteil, welcher zu einer Fehlschweissung bzw. zu einem Durchbrennen des dünnwandigen Wellrohrteils in der Schweisszone führen könnte.

### Kurze Beschreibung der Zeichnungen

Weitere bevorzugte Ausführungen der Erfindung ergeben sich aus den abhängigen Ansprüchen und aus der nun folgenden Beschreibung anhand der Figuren. Dabei zeigen:
Fig. 1 einen Längsschnitt durch ein erfindungsgemässes Kompensationselement;
Fig. 2 das Detail A aus Fig. 1; die Figuren 3 bis 8 Darstellungen wie Fig. 2<*> von weiteren erfindungsgemässen Ausführungsformen;
Fig. 9 auf der linken Seite eine Vorderansicht auf und auf der rechten Seite einen Längsschnitt durch die obere Hälfte des Kompensationselements aus Fig. 1 beim Verschweissen des Wellrohrteils mit dem flanschartigen Anschlussteil gemäss einem ersten erfindungsgemässen Verfahren; und
Fig. 10 Darstellungen wie Fig. 9 beim Verschweissen des Wellrohrteils mit dem flanschartigen Anschlussteil gemäss einem zweiten erfindungsgemässen Verfahren.

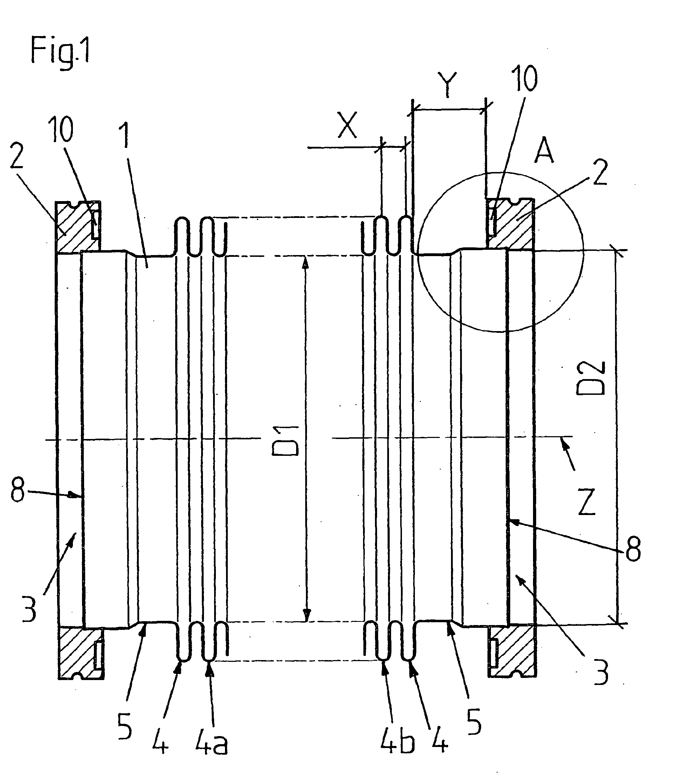

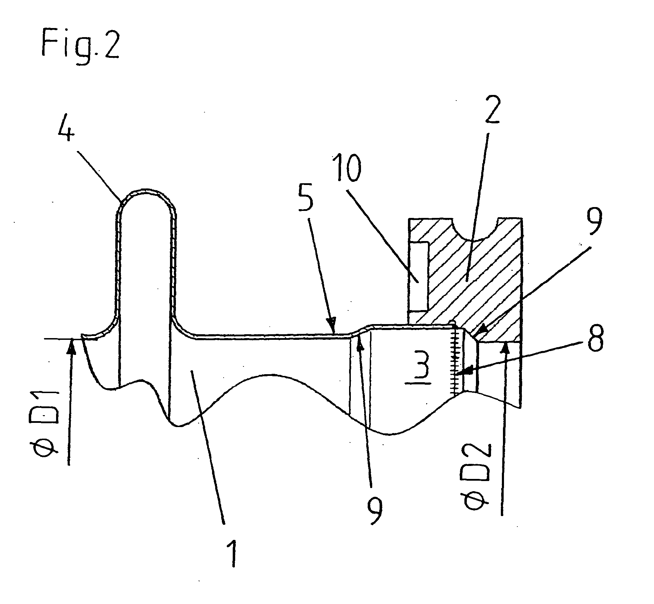

Wege zur Ausführung der Erfindung Eine erste bevorzugte Ausführungsform des erfindungsgemässen Kompensationselements ist in gekürzter Darstellung (siehe strichpunktierte Linien) im Längsschnitt in Fig. 1 dargestellt. Wie zu erkennen ist, besteht das Kompensationselement aus einem dünnwandigen Wellrohrteil 1 und zwei jeweils endseitig an diesem angeordneten flanschartigen Anschlussteilen 2. Der Wellrohrteil 1 besteht aus einem eigentlichen, parallel gewellten Wellenteil mit einer Vielzahl von parallelen Rohrwellen 4, 4a, 4b, und zwei jeweils endseitig an den Wellenteil anschliessenden und im wesentlichen zylindrischen Rohrstutzen 5. Er ist durch Umformen und anschliessendes Verschweissen aus einem Edelstahlblechstreifen gebildet worden. Wie in Zusammenschau mit Fig. 2 erkennbar ist, welche das Detail "A" aus Fig. 1 zeigt, sind die Rohrstutzen 5 mit ihren dem Wellenteil abgewandten Enden jeweils axial in eine entsprechende Ausdrehung in dem jeweils zugeordneten flanschartigen Anschlussteil 2 eingeschoben, so dass sich Wellrohrteil 1 und flanschartiges Anschlussteil 2 jeweils axial überlappen. Dabei sind die Rohrstutzen 5 jeweils an ihrem axial äussersten Ende auf der Innenseite des Kompensationselements mit dem zugeordneten flanschartigen Anschlussstück 2 derart verschweisst, dass das Wellrohrteil 1 und das flanschartige Anschlussteil 2 zusammen mit der Schweissnaht 8 (anspruchsgemässe Fügestelle) eine durchgehende, geschlossene Oberfläche 3 bilden. Wie weiter zu erkennen ist, sind die lichten Durchmesser D1, D2 des Wellrohrteils 1 und der flanschartigen Anschlussteile 2 praktisch identisch, so dass eine verlustarme Strömungsführung begünstigt wird. Im Übergangsbereich von dem Wellrohrteil 1 auf das jeweilige flanschartige Anschlussteil 2 weist das Kompensationselement jeweils einen geringfügig erweiterten Innendurchmesser auf, welcher jedoch über konische Wandbereiche 9 und ohne Bildung von Stufen in die Bereiche mit den kleineren lichten Innendurchmessern D1, D2 übergeht. Wie aus Fig. 1 ersichtlich ist, existiert jeweils zwischen dem flanschartigen Anschlussteil 2 und der diesem nächstliegenden Rohrwelle 4 des Wellrohrteils 2 ein Abstand Y, welcher ein Mehrfaches des Abstands X beträgt, der zwischen den Kämmen zweier benachbarter Rohrwellen 4, 4a existiert. Hierdurch ist es problemlos möglich, Befestigungshaken in die an den Anschlussteilen 2 dafür vorgesehenen Vertiefungen 10 einzuhängen.

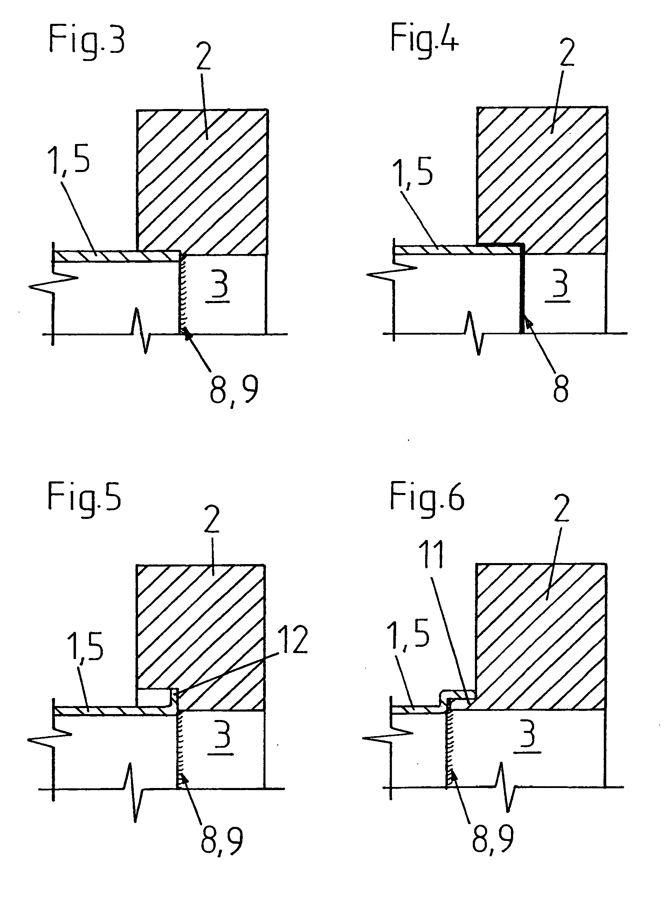

Die Figuren 3 bis 8 zeigen ähnliche Darstellung wie Fig. 2, also Längsschnitte durch einen oberen Teil eines Endes weiterer erfindungsgemässer Kompensationselemente, wobei mit den vorhergehenden Figuren gleiche Bezugsziffern Bauteile gleicher Funktion kennzeichnen. Bei den in den Figuren 4-5 und 7-8 gezeigten Ausführungsformen ist ebenfalls jeweils ein vom Wellrohrteil 1 gebildeter Rohrstutzen 5 axial in eine zugeordnete Ausdrehung im zugeordneten flanschartigen Anschlussteil 2 eingeschoben, so dass sich beide Bauteile 1, 2 axial überlappen. Bei der in Fig. 6 gezeigten Ausführungsform übergreift der vom Wellrohrteil 1 gebildete Rohrstutzen 5 einen vom flanschartigen Anschlussteil 2 gebildeten Rand 11, so dass Wellrohrteil 1 und Anschlussteil 2 einander axial überlappen. Bei allen Ausführungsformen sind die Bauteile 1, 2 derartig ausgebildet, dass beim Herstellen der axialen Überlappung automatisch eine radiale Ausrichtung derselben zueinander erfolgt.

Dabei ist bei den Ausführungsformen gemäss den Figuren 3, 5 und 6 der Innendurchmesser der Rohrstutzens 5 geringfügig kleiner als der Innendurchmesser des flanschartigen Anschlussteils 2. Der Rohrstutzen 5 ist an seinem in axialer Richtung gesehen äusserten Ende mit dem Anschlussteil 2 verschweisst , derart, dass die als Schweissnaht ausgebildete Fügestelle 8 einen konischen Wandbereich 9 bildet, über welchen die beiden unterschiedlichen Innendurchmesser ohne Bildung von Stufen ineinander übergehen. Der einzige Unterschied zwischen den in den Figuren 3 und 5 dargestellten Ausführungsformen besteht darin, dass in Fig. 3 das Ende des Rohrstutzens 5 als einfacher Rohrabschnitt ausgebildet ist, während es in Fig. 5 einen flanschartigen Bördelrand 12 auf-weist. Bei der Ausführungsform gemäss Fig. 6 ist das Ende des Rohrstutzens 5 im Innendurchmesser erweitert und nimmt den vom Anschlussteil 2 gebildeten Rand 11 in sich auf.

Die Ausführungsform gemäss Fig. 4 unterscheidet sich von derjenigen gemäss Fig. 3 lediglich darin, dass die Innendurchmesser des Rohrstutzens 5 und des flanschartigen Anschlussteils 2 identisch sind und die Fügestelle 8 als Lötverbindung ausgebildet ist.

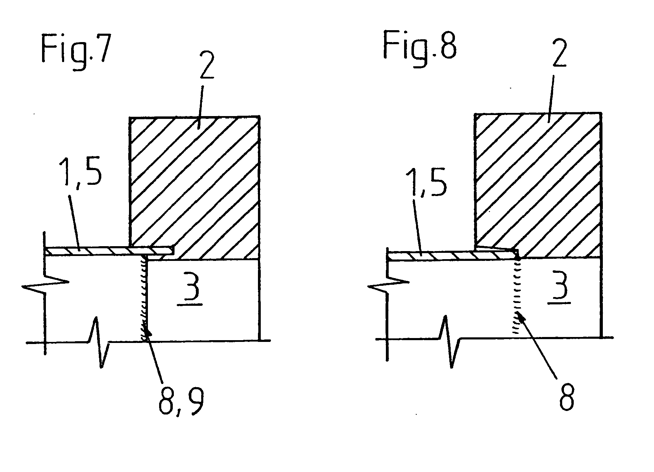

Die Ausführungsform gemäss Fig. 8 unterscheidet sich von derjenigen gemäss Fig. 3 lediglich darin, dass die Innendurchmesser des Rohrstutzens 5 und des flanschartigen Anschlussteils 2 identisch sind und die Ausdrehung im flanschartigen Anschlussteil 2, in welche der Rohrstutzen 5 axial eintritt, konisch ausgebildet ist, wodurch sich der Fertigungsprozess vereinfachen lässt, da das axiale Ineinanderschieben erleichtert wird und im zusammengeschobenen Zustand auf einfache Weise in dem Bereich, in welchem die Verschweissung erfolgen soll, eine radiale Vorspannung zwischen den Bauteilen 2, 5 erzeugbar ist.

Bei der Ausführungsform gemäss Fig. 7 tritt das als einfacher Rohrabschnitt ausgebildete Ende des Rohrstutzens 5 des Wellrohrteils 1 axial in einen kreisringförmigen Spalt im flanschartigen Anschlussteil 2 ein. Dabei ist der Innendurchmesser des Rohrstutzens 5 geringfügig grösser als der Innendurchmesser des Anschlussteils 2. Die Fügestelle 8 ist als Schweissnaht ausgebildet, welche gleichzeitig einen konischen Wandbereich 9 bildet, über welchen die beiden unterschiedlichen Innendurchmesser ohne Bildung von Stufen ineinander übergehen.

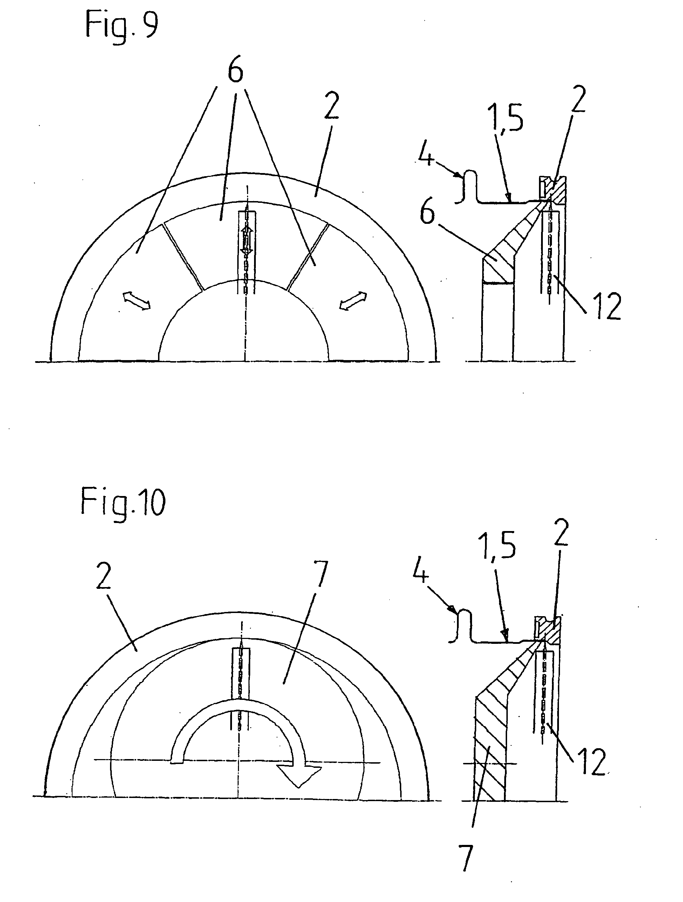

Bei allen in den Figuren 1-8 dargestellten Ausführungsformen bilden der Wellrohrteil 1, das flanschartige Anschlussteil 2 und die Stoffschlüssige Fügestelle 8 zusammen auf der Innenseite des Kompensationselements eine durchgehende geschlossene Oberfläche 3. Fig. 9 zeigt auf der linken Seite eine Vorderansicht auf die obere Hälfte des Kompensationselements aus Fig. 1 und auf der rechten Seite einen Längsschnitt durch diese obere Hälfte beim Verschweissen des Rohrstutzens 5 des Wellrohrteils 1 mit dem flanschartigen Anschlussteil 2 gemäss einem ersten erfindungsgemässen Herstellungsverfahren. Dabei wird der Rohrstutzen 5 in einem Bereich, in welchem er axial innerhalb der Ausdrehung des flanschartigen Anschlussteils 2 angeordnet ist, von innen her mittels feststehender Spreizbacken 6 radial gegen das Anschlussteil 2 gepresst und sodann an seinem in axialer Richtung gesehen äussersten Ende mittels eines TIGSchweissbrenners 12 ohne Verwendung eines Zusatzwerkstoffs mit dem flanschartigen Anschlussteil 2 verschweisst. Anschliessend werden die Spreizbacken 6 entfernt.

Fig. 10 zeigt Darstellungen wie Fig. 9 beim Verschweissen des Wellrohrteils mit dem flanschartigen Anschlussteil aus Fig. 1 gemäss einem zweiten erfindungsgemässen Verfahren. Dieses Verfahren unterscheidet sich von dem in Fig. 9 gezeigten lediglich dadurch, dass hier an Stelle von feststehenden Spreizbacken eine am Innenumfang des Rohrstutzens 5 abrollende Andrückrolle 7 verwendet wird und jeweils gerade an derjenigen Umfangsposition geschweisst wird, an welcher die Andrückrolle 7 gerade wirksam ist.

Auch wenn in den Figuren ausschliesslich Kompensationselemente mit kreisförmigem lichten Durchtrittsquerschnitt gezeigt sind ist die Erfindung nicht auf solche Ausführungsformen beschränkt, sondern kann ebenfalls auch für nicht kreisförmige, insbesondere gleichförmig vieleckige Querschnitte angewendet werden.

## Patentansprüche

1. Verfahren zur Herstellung eines Kompensationselements zum Ausgleichen von Längenänderungen oder eines Versatzes in Rohrleitungen, umfassend die Schritte:
a) Bereitstellen eines dünnwandigen Wellrohrteils (1) und eines zugeordneten flanschartigen Anschlussteils (2);
b) Anordnen des flanschartigen Anschlussteils (2) an einem Ende des Wellrohrteils (1); und
c) stoffschlüssiges Verbinden des Wellrohrteils (1) mit dem flanschartigen Anschlussteil (2) über eine Fügestelle (8), derart, dass diese auf der Innenseite des durch sie gebildeten Kompensationselements zusammen mit der stoffschlüssigen Fügestelle (8) eine durchgehende, geschlossene Oberfläche bilden,
wobei
beim Anordnen des flanschartigen Anschlussteils (2) an dem Ende des Wellrohrteils (1) beide Teile axial ineinander eingeschoben werden,
wobei das stoffschlüssige Verbinden durch Verschweissen erfolgt,
**dadurch gekennzeichnet, dass**
beim Verschweissen das Wellrohrteil (1) und das flanschartige Anschlussteil (2) radial aneinander angepresst werden.

2. Verfahren nach Anspruch 1, **dadurch gekennzeichnet, dass** beim Anordnen des flanschartigen Anschlussteils (2) an dem Ende des Wellrohrteils (1) ein vom Wellrohrteil (1) gebildeter Rohrstutzen (5) über das flanschartige Anschlussteil (2) geschoben wird.

3. Verfahren nach Anspruch 1, **dadurch gekennzeichnet, dass** beim Anordnen des flanschartigen Anschlussteils (2) an dem Ende des Wellrohrteils (1) ein vom Wellrohrteil (1) gebildeter Rohrstutzen (5) in das flanschartige Anschlussteil (2) eingeschoben wird.

4. Verfahren nach Anspruch 3, **dadurch gekennzeichnet, dass** beim Verschweissen das Wellrohrteil (1) und das flanschartige Anschlussteil (2) radial von innen her mittels einer im aktivierten Zustand feststehenden radialen Spreizvorrichtung (6) aneinander angepresst werden.

5. Verfahren nach Anspruch 3, **dadurch gekennzeichnet, dass** beim Verschweissen das Wellrohrteil (1) und das flanschartige Anschlussteil (2) radial von innen her mittels einer beim Verschweissen am Innenumfang abrollenden Andrückrolle (7) aneinander angepresst werden.

6. Verfahren nach einem der vorhergehenden Ansprüche, **dadurch gekennzeichnet, dass** das Verschweissen ausschliesslich unter einem Aufschmelzen von Material des Wellrohrteils (1) und des flanschartigen Anschlussteils (2) erfolgt.

7. Verfahren nach einem der vorhergehenden Ansprüche, **dadurch gekennzeichnet, dass** das Verschweissen durch TIG-Schweissen oder Laserschweissen erfolgt.

8. Kompensationselement **dadurch gekennzeichnet, dass** das Kompensationselement mit dem Verfahren gemäss einem der vorangehenden Ansprüche hergestellt ist.

9. Kompensationselement nach Anspruch 8, **dadurch gekennzeichnet, dass** dieses aus Metall ist, insbesondere aus rostfreiem Stahl.

## Claims

1. A method for producing a compensation element for compensating a change in the length or a misalignment of a conduit comprising the steps:
a) providing a corrugated tube element (1) having a thin wall and a corresponding flange-like connecting element (2);
b) arranging the flange-like connecting element (2) at an end portion of the corrugated tube element (1); and
c) providing a material fit between the corrugated tube element (1) and the flange-like connecting element (2) at a joint (8), such that the inner surface of the compensation element formed by the joint (8) and the material fit joint (8) is a continuous, closed surface,
wherein
while arranging the flange-like connecting element (2) at the end portion of the corrugated tube element (1) both elements are axially telescoped into each other, wherein the material fit connection is provided by welding,
**characterised in that**
during welding the corrugated tube element (1) and the flange-like connecting element (2) are radially pressed to each other.

2. The method of claim 1, **characterised in that** when arranging the flange-like connecting element (2) at the end of the corrugated tube element (1) a tube socket (5) formed by the corrugated tube element (1) is moved over the flange-like connecting element (2).

3. The method of claim 1, **characterised in that** when arranging the flange-like connecting element (2) at the end portion of the corrugated tube element (1) the tube socket (5) formed by the corrugated tube element (1) is moved into the flange-like connecting element (2).

4. The method of claim 3, **characterised in that** during welding the corrugated tube element (1) and the flange-like connecting element (2) are radially pressed to each other by applying a force from inside out by means of a radial ... device (6) which is fixed when being activated.

5. The method of claim 3, **characterised in that** during welding the corrugated tube element (1) and the flange-like connecting element (2) are radially pressed to each other from inside out by means of a pressure roller (7) rolling off on the inner circumference during welding.

6. The method of any of the previous claims, **characterised in that** welding is provided only by melting material of the corrugated tube element (1) and the flange-like connecting element (2).

7. The method of any of the previous claims, **characterised in that** welding is provided by TIG-welding or laser welding.

8. A compensation element, **characterised in that** the compensation element is produced by a method according to any of the previous claims.

9. The compensation element of claim 8, **characterised in that** the compensation element is made of metal, particularly of stainless steel.

## Revendications

1. Procédé de fabrication d'un élément de compensation pour compenser des variations de longueur ou un décalage dans des conduits tubulaires, présentant les étapes consistant à :
a) préparer une partie de tube ondulé (1) à paroi mince et une partie de raccordement (2) de type bride associée ;
b) disposer la partie de raccordement (2) de type bride contre une extrémité de la partie de tube ondulé (1) ; et
c) relier par complémentarité de matières la partie de tube ondulé (1) à la partie de raccordement (2) de type bride par l'intermédiaire d'un point de jonction (8), de telle sorte que celui-ci forme, sur le côté intérieur de l'élément de compensation formé à travers lui et conjointement avec le point de jonction (8) réalisé par complémentarité de matières, une surface fermée traversante ;
sachant que lors de la mise en place de la partie de raccordement (2) de type bride contre l'extrémité de la partie de tube ondulé (1), les deux parties sont poussées l'une dans l'autre dans le plan axial ; et
sachant que la jonction par complémentarité de matières est réalisée par soudure ;
**caractérisé en ce que** :
lors de la soudure, la partie de tube ondulé (1) et la partie de raccordement (2) de type bride sont comprimées l'une contre l'autre dans le plan radial.

2. Procédé selon la revendication 1, **caractérisé en ce que** lors de la mise en place de la partie de raccordement (2) de type bride contre l'extrémité de la partie de tube ondulé (1), un manchon tubulaire (5) formé par la partie de tube ondulé (1) est poussé au-delà de la partie de raccordement (2) de type bride.

3. Procédé selon la revendication 1, **caractérisé en ce que** lors de la mise en place de la partie de raccordement (2) de type bride contre l'extrémité de la partie de tube ondulé (1), un manchon tubulaire (5) formé par la partie de tube ondulé (1) est enfoncé dans la partie de raccordement (2) de type bride.

4. Procédé selon la revendication 3, **caractérisé en ce que** lors de la soudure, la partie de tube ondulé (1) et la partie de raccordement (2) de type bride sont comprimées l'une contre l'autre dans le plan radial depuis l'intérieur à l'aide d'un dispositif extensible (6) radial fixe à l'état activé.

5. Procédé selon la revendication 3, **caractérisé en ce que** lors de la soudure, la partie de tube ondulé (1) et la partie de raccordement (2) de type bride sont comprimées l'une contre l'autre dans le plan radial depuis l'intérieur à l'aide d'un rouleau compresseur (7) effectuant lors de la soudure un mouvement de roulement contre la périphérie intérieure.

6. Procédé selon l'une quelconque des revendications précédentes, **caractérisé en ce que** la soudure est réalisée exclusivement par fusion de matière de la partie de tube ondulé (1) et de la partie de raccordement (2) de type bride.

7. Procédé selon l'une quelconque des revendications précédentes, **caractérisé en ce que** la soudure est réalisée au moyen d'un procédé de soudage TIG ou laser.

8. Élément de compensation **caractérisé en ce que** l'élément de compensation est fabriqué au moyen du procédé selon l'une quelconque des revendications précédentes.

9. Élément de compensation selon la revendication 8, **caractérisé en ce que** celui-ci est en métal, notamment en acier inoxydable.
